# EUROPEAN PATENT SPECIFICATION

(11) **EP 0 838 322 B1**
(45) Date of publication and mention of the grant of the patent: **13.08.2003**
(21) Application number: 97650046.2
(22) Date of filing: 24.10.1997
(51) Int. Cl.: B29C 49/04, B29C 47/20, B29C 47/86, B29C 47/22

(54) **A method of and apparatus for blow-moulding**
Verfahren und Vorrichtung zum Blasformen
Procédé et appareil pour le moulage par soufflage

(30) Priority: 25.10.1996 IE 960749; 18.12.1996 IE 960898
(43) Date of publication of application: 29.04.1998
(73) Proprietor: Menza Limited, County Westmeath (IE)
(72) Inventor: Flood, Nicolas, Mullingar, County Westmeath (IE); Berine, Patrick, Mullingar, County Westmeath (IE)
(74) Representative: O'Brien, John Augustine

(56) References cited:
- GB-A- 1 234 182
- US-A- 3 391 051
- US-A- 4 362 496
- US-A- 5 273 421
- PATENT ABSTRACTS OF JAPAN vol. 007, no. 085 (M-206), 8 April 1983 & JP 58 012743 A (SUMITOMO KAGAKU KOGYO KK), 24 January 1983
- PATENT ABSTRACTS OF JAPAN vol. 018, no. 173 (M-1581), 24 March 1994 & JP 05 338009 A (KOBE STEEL LTD), 21 December 1993

## Description

The invention relates to extrusion blow moulding. More particularly, the invention relates to a method of and apparatus for blow-moulding thermoplastics material to form a blow moulded article such as a case, for example, a tool case comprising two case halves connected by a hinge.

More particularly, the invention relates to a method of blow moulding thermoplastics material of the type comprising the steps of:-
extruding a parison by pushing a hollow tube of hot thermoplastics material through a die gap between a mandrel and a die;
closing a pair of mould halves around the extruded parison;
inserting a blow pin into the parison;
blowing air through the blow pin to inflate the parison against the mould halves; and
releasing a formed article from the mould;

The first step in extrusion blow moulding is to form a hollow parison of molten thermoplastics material which is then formed into a desired shaped article.

A typical accumulator head of the type conventionally used in formation of a parison for blow moulding is illustrated in Fig. A. A continuous flow of molten thermoplastics material enters the accumulator head through an extruder A at an inlet side. The thermoplastics material is formed into a hollow tube which is extruded through a pre-determined gap B defined between a mandrel C and die D at a lower outlet.

Thermoplastics material flows from the extruder A fitted with a flange adapter F, through an adapter G, a diverter H and down over a torpedo I. The function of the torpedo I is to convert a rod of the thermoplastics material into a hollow tube. The torpedo I is supported by a spider J. After flowing over the spider J, the thermoplastic material enters a melt accumulator chamber K. This causes a push out piston L to be pushed upwardly under the pressure of the thermoplastics material. When a desired preset volume of thermoplastics material has accumulated a push out cylinder M is pressurised, the die gap B is opened and the material is extruded in the form of a hollow tube through the preset die gap B.

In this case, it will be noted that the push out cylinder M¹ is illustrated to the left-hand side of Fig. A in the raised position in which the thermoplastics material accumulates in the melt accumulator chamber K. The push out cylinder M² to the right hand side of Fig. A is illustrated in the extended position in which the thermoplastics material may be extruded through the die gap B.

In the case of Fig. A, the mandrel and die are of the converge tooling type used for extruding a parison of relatively small diameter. To form a parison of larger diameters the tooling is changed and diverge tooling is used.

There are a number of problems with parisons formed using such conventional accumulator heads.

The surface finish of the parison controls the exterior finish of the outside surface of the moulded article. Normally after a short time in production, thermoplastics material starts to build up on the inner surfaces of the head and extrusion tooling which gives rise to imperfections including die lines, contamination, burned material, flow lines, and uneven surface finish.

The quality of the finished article is therefore adversely affected. In order to overcome this problem frequent die and mandrel cleaning operations with considerable downtime are required.

In addition, due to material build up around the faces of the die and mandrel, the extruded parison often fails to drop cleanly into an open mould. This causes further problems in reject parts, stoppages to clean the surfaces, contamination, and inconsistent material distribution.

Document US-A-4 362 496 discloses a method and an apparatus for improving physical properties of the extruded material by orientation occuring through the die.

According to the invention there is provided a method of blow moulding thermoplastics material comprising the steps of:
forming hot thermoplastics material into a hollow tube;
extruding a parison by pushing the hollow tube of thermoplastics material through a die head;
the die head comprising a mandrel and a die spaced-apart to define a gap therebetween, the die head having a lower die exit leading from the gap;
the die head having an exit compression ring extending into the gap adjacent to the lower die exit and the die and the mandrel including continuously curved surfaces in a region of the gap and adjacent to the exit compression ring;
passing the tube of hot thermoplastics material over the compression ring adjacent to the lower die exit and the die gap;
the exit compression ring being shaped to promote turbulent type flow of thermoplastics material to provide a smooth surface finish to the hollow tube of hot thermoplastics material as it passes over the compression ring;
closing a pair of mould halves around the extruded parison;
inserting a blow pin into the parison;
blowing air through the blow pin to inflate the parison against the mould halves; and
releasing a formed article from the mould.

In a preferred embodiment of the invention the exit compression ring forms an extension of the mandrel and projects from the mandrel towards the die. In this case preferably the exit compression ring projects from the mandrel for a distance of at least 0.2 mm towards the die, most preferably for a distance of approximately 0.3 mm towards the die.

In another embodiment of the invention the method includes the step of enhancing the flow of thermoplastic material along the die by treating the die surface to enhance wear resistance and to enhance flow of thermoplastics material. Preferably the die face is ion impregnated.

In a further embodiment of the invention the method includes the step of automatically releasing a formed parison from the outer faces of the die and mandrel. Preferably release means is provided on the outer faces of the die and mandrel. Ideally the release means is provided by a first strip of release material along the outer face of the die and a second strip of release material provided along the outer face of the mandrel.

In another embodiment of the invention the method includes the step of heating the die at least adjacent to the die gap. In this case typically the die is heated by applying a heater band to the outside of the die.

The invention also provides an extrusion blow moulded article whenever formed by the method of the invention.

In another aspect the invention provides blow moulding apparatus for blow moulding thermoplastics material comprising a die head through which a hollow tube of thermoplastics material is pushed, a pair of mould halves for closing around an extruded parison, and a blow pin for blowing air through the blow pin to inflate the parison against the mould halves to form a blow moulded article, the die head comprising a mandrel and a die which are spaced-apart to define a gap therebetween, the die head having a lower die exit leading from the gap, the die head having an exit compression ring extending into the gap adjacent to the lower die exit, and the die and the mandrel including continuously curved surfaces in a region of the gap and adjacent to the exit compression ring, the hollow tube of thermoplastics material being passed over the compression ring adjacent to the lower die exit and the die gap and the exit compression ring being shaped to promote turbulent type flow of thermoplastics material to provide a smooth surface finish to the hollow tube of hot thermoplastics material as it passes over the compression ring.

Other details of the apparatus correspond with those of the blow moulding method of the invention.

The invention will be more clearly understood from the following description thereof given by way of example only with reference to the accompanying drawings in which:-
Fig. 1 is a schematic cross sectional view of a mandrel and die section of an accumulator head according to the invention and used in the method of the invention; and
Fig. 2 is a perspective view of the mandrel part of the accumulator head of Fig. 1.

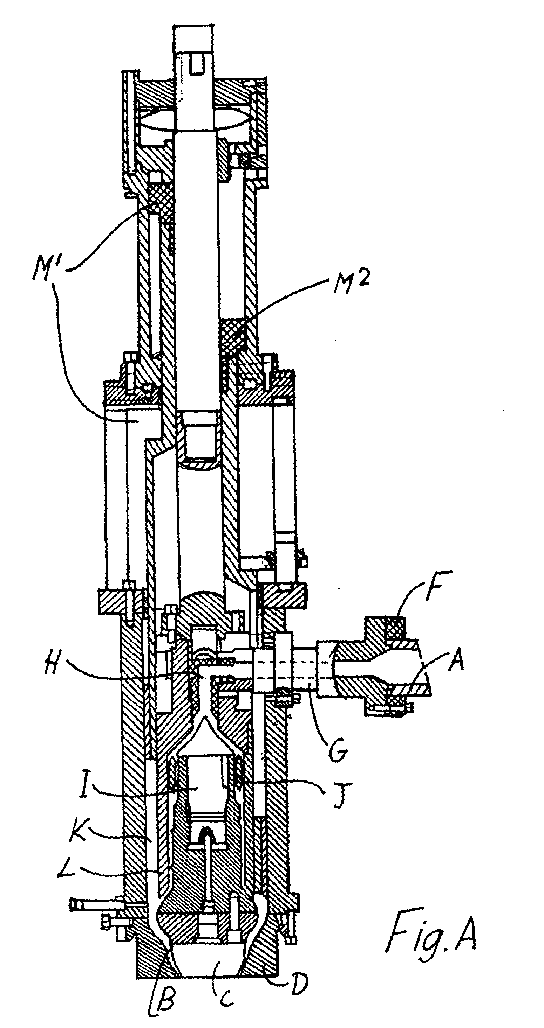

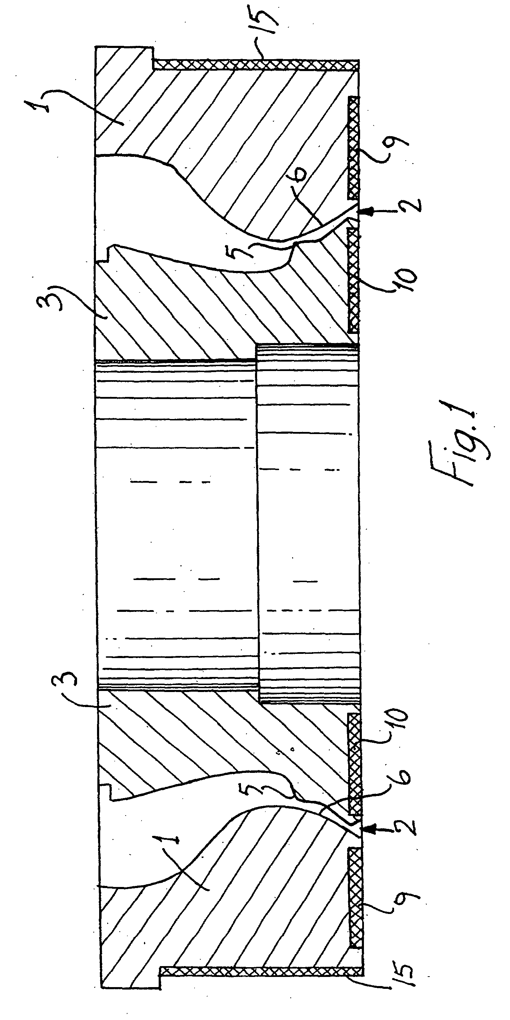

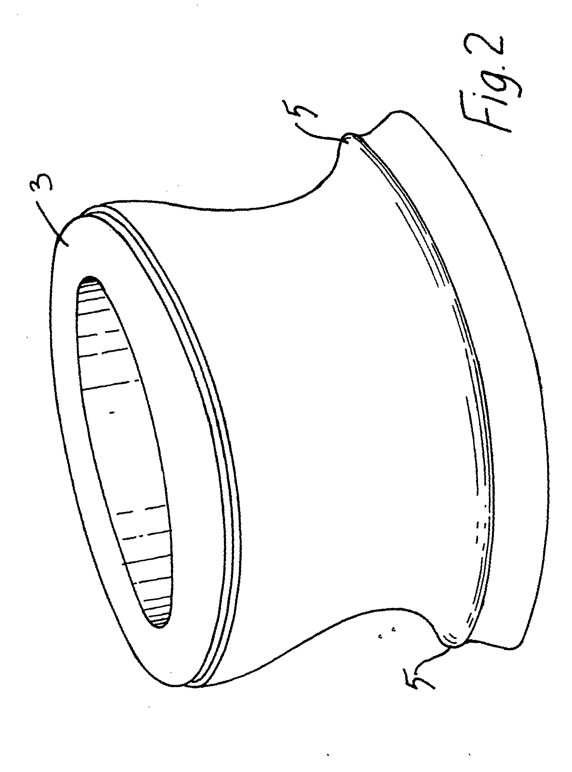

Referring to Figs. 1 and 2, there is illustrated portion of a die 1 and mandrel 3 with a gap 2 therebetween. The die 1 and mandrel 3 are provided with a number of features to self clean the die 1 as a tubular parison is formed in the method of blow moulding according to the invention.

An exit compression means is provided by an exit compression ring 5 in this case formed on the mandrel 3 adjacent to the die exit 2. The ring 5 acts as a flow enhancer which ensures free flow of the thermo-plastic material across the surface of the die 1 adjacent to the die exit 2. The exit compression ring 5 presents an obstruction to the flow of hot thermoplastics material and creates turbulent-type flow of the material. This ensures that the thermoplastic material is maintained at a flowrate such that the material does not become stuck to the face of the mandrel and/or die adjacent to the die exit.

Typically, in the case of high density polypropylene the diameter of the flow restrictor compression ring 5 is approximately 0.3mm.

The surface 6 of the die is treated to enhance wear resistance and to enhance flow of thermoplastic material. In this case, the die face is ion impregnated.

Outer surfaces of the die 1 and mandrel 3 are provided with a release means. In this case, the release means is provided by Teflon inserts 9, 10 for the die and mandrel respectively. (Teflon is a Trade Mark)

A heater band 15 may be provided on the die 1 to enhance flow characteristics.

The self cleaning action is an important feature of the invention as it results in improved surface finish, elimination of imperfections caused by die lines, a reduction in the frequency of shut-downs for cleaning and a lowering in parison stress which greatly reduces the amount of faults and welding problems associated with moulding products when the two sides are close together.

The provision of release means on the outer surfaces of the die and mandrel eliminates problems associated with the parison sticking to the die face and avoids problems associated with degraded material stuck to the die face breaking away and contaminating the parison.

The invention is not limited to the embodiments hereinbefore described which may be varied in detail and construction. For example, it will be appreciated that the invention may be applied to converge or diverge tooling.

## Claims

1. A method of blow moulding thermoplastics material comprising the steps of:
forming hot thermoplastics material into a hollow tube;
extruding a parison by pushing the hollow tube of thermoplastics material through a die head;
the die head comprising a mandrel (3) and a die (1) spaced-apart to define a gap therebetween, the die head having a lower die exit (2) leading from the gap;
the die head having an exit compression ring (5) extending into the gap adjacent to the lower die exit (2) and the die (1) and the mandrel (3) including continuously curved surfaces in a region of the gap and adjacent to the exit compression ring (5);
passing the tube of hot thermoplastics material over the compression ring (5) adjacent to the lower die exit (2) and the die gap;
the exit compression ring (5) being shaped to promote turbulent type flow of thermoplastics material to provide a smooth surface finish to the hollow tube of hot thermoplastics material as it passes over the compression ring (5);
closing a pair of mould halves around the extruded parison;
inserting a blow pin into the parison;
blowing air through the blow pin to inflate the parison against the mould halves; and
releasing a formed article from the mould.

2. A method as claimed in claim 1 wherein the exit compression ring (5) forms an extension of the mandrel (3) and projects from the mandrel (3) towards the die (1).

3. A method as claimed in claim 2 wherein the exit compression ring (5) projects from the mandrel (3) for a distance of at least 0.2 mm towards the die (1).

4. A method as claimed in claim 3 wherein the exit compression ring (5) projects from the mandrel (3) for a distance of approximately 0.3 mm towards the die (1).

5. A method as claimed in any preceding claim including the step of enhancing the flow of thermoplastic material along the die (1) by treating the die surface (6) to enhance wear resistance and to enhance flow of thermoplastics material.

6. A method as claimed in claim 5 wherein the die face (6) is ion impregnated.

7. A method as claimed in any preceding claim including the step of automatically releasing a formed parison from the outer faces of the die (1) and mandrel (3).

8. A method as claimed in claim 7 wherein release means (9, 10) is provided on the outer faces of the die (1) and mandrel (3).

9. A method as claimed in claim 8 wherein the release means is a first strip (9) of release material provided along the outer face of the die (1) and a second strip (10) of release material provided along the outer face of the mandrel (3).

10. A method as claimed in any preceding claim including the step of heating the die (1) at least adjacent to the die gap (2).

11. A method as claimed in claim 10 wherein the die is heated by applying a heater band to the outside of the die (1).

12. Apparatus for blow moulding thermoplastics material comprising a die head through which a hollow tube of thermoplastics material is pushed, a pair of mould halves for closing around an extruded parison, and a blow pin for blowing air through the blow pin to inflate the parison against the mould halves to form a blow moulded article, the die head comprising a mandrel (3) and a die (1) which are spaced-apart to define a gap therebetween, the die head having a lower die exit (2) leading from the gap, the die head having an exit compression ring (5) extending into the gap adjacent to the lower die exit (2), and the die (1) and the mandrel (3) including continuously curved surfaces in a region of the gap and adjacent to the exit compression ring (5), the hollow tube of thermoplastics material being passed over the compression ring (5) adjacent to the lower die exit (2) and the die gap and the exit compression ring (5) being shaped to promote turbulent type flow of thermoplastics material to provide a smooth surface finish to the hollow tube of hot thermoplastics material as it passes over the compression ring (5).

## Patentansprüche

1. Verfahren zum Blasformen eines thermoplastischen Materials, das die folgenden Schritte aufweist:
Formen von heißem thermoplastischem Material zu einem hohlen Rohr;
Extrudieren eines Rohlings durch Pressen des hohlen Rohrs aus thermoplastischem Material durch einen Formkopf;
wobei der Formkopf einen Dorn (3) und eine Form (1) aufweist, die zum Begrenzen eines Zwischenraums zwischen denselben beabstandet sind, und der Formkopf einen aus dem Zwischenraum führenden unteren Formausgang (2) aufweist;
wobei der Formkopf einen Ausgangskompressionsring (5) aufweist, der sich in den Zwischenraum angrenzend an den unteren Formausgang (2) erstreckt, und die Form (1) und der Dorn (3) kontinuierlich gekrümmte Oberflächen in einem Bereich des Zwischenraums und angrenzend an den Ausgangskompressionsring (5) umfassen;
Führen des Rohrs aus heißem thermoplastischem Material über den Kompressionsring (5) angrenzend an den unteren Formausgang (2) und den Formzwischenraum;
wobei der Ausgangskompressionsring (5) geformt ist, um Fluss vom Wirbeltyp des thermoplastischen Materials zu fördern, um eine glatte Oberflächenbeschaffenheit an dem hohlen Rohr aus heißem thermoplastischem Material zu schaffen, wenn es über den Kompressionsring (5) geführt wird;
Schließen eines Paars von Formhälften um den extrudierten Rohling;
Einführen eines Blasdorns in den Rohling;
Blasen von Luft durch den Blasdom zum Aufblasen des Rohlings gegen die beiden Formhälften; und
Lösen des geformten Artikels aus der Form.

2. Verfahren nach Anspruch 1, bei dem der Ausgangskompressionsring (5) eine Verlängerung des Dorns (3) bildet und aus dem Dom (3) zur Form (1) hin vorsteht.

3. Verfahren nach Anspruch 2, bei dem der Ausgangskompressionsring (5) aus dem Dorn (3) für eine Strecke von wenigstens 0,2 mm zur Form (1) hin vorsteht.

4. Verfahren nach Anspruch 3, bei dem der Ausgangskompressionsring (5) aus dem Dorm (3) für eine Strecke von ungefähr 0,3 mm zur Form (1) hin vorsteht.

5. Verfahren nach einem vorhergehenden Anspruch, das den Schritt einschließt, den Fluss von thermoplastischem Material entlang der Form (1) durch Behandlung der Formoberfläche (6) zum Verbessern von Abnutzungswiderstand und zum Verbessern des Flusses von thermoplastischem Material zu verbessern.

6. Verfahren nach Anspruch 5, bei dem die Formfläche (6) ionen-imprägniert ist.

7. Verfahren nach einem vorhergehenden Anspruch, das den Schritt einschließt, automatisch einen geformten Rohling von den Außenflächen der Form (1) und des Dorns (3) loszulösen.

8. Verfahren nach Anspruch 7, bei dem ein Loslösemittel (9, 10) auf den Außenflächen der Form (1) und des Dorns (3) vorgesehen ist.

9. Verfahren nach Anspruch 8, bei dem das Loslösemittel einen ersten Streifen (9) aus Loslösematerial, der entlang der Außenfläche der Form (1) vorgesehen ist, und einen zweiten Streifen (10) aus Loslösematerial darstellt, der entlang der Außenfläche des Doms (3) vorgesehen ist.

10. Verfahren nach einem vorhergehenden Anspruch, das den Schritt umfasst, die Form (1) wenigstens angrenzend an den Formzwischenraum (2) zu erhitzen.

11. Verfahren nach Anspruch 10, bei dem die Form durch Anlegen eines Erhitzungsbands an die Außenseite der Form (1) erhitzt wird.

12. Gerät zum Blasformen von thermoplastischem Material, das einen Formkopf, durch den ein hohles Rohr aus thermoplastischem Material geschoben wird, ein Paar von Formhälften zum Schließen um einen extrudierten Rohling herum, und einen Blasdorn zum Blasen von Luft durch den Blasdorn aufweist, um den Rohling gegen die Formhälften zum Bilden eines blasgeformten Artikels aufzublasen, wobei der Formkopf einen Dorn (3) und eine Form (1) aufweist, die zum Begrenzen eines Zwischenraums zwischen denselben beabstandet sind, wobei der Formkopf einen unteren Formausgang (2) umfasst, der aus dem Zwischenraum herausführt, wobei der Formkopf einen Ausgangskompressionsring (5) aufweist, der sich in den Zwischenraum angrenzend an den unteren Formausgang (2) erstreckt, und die Form (1) und der Dorn (3) kontinuierlich gekrümmte Oberflächen in einem Bereich des Zwischenraums und angrenzend an den Ausgangskompressionsring (5) umfassen, wobei das hohle Rohr aus thermoplastischem Material über den Kompressionsring (5) angrenzend an den unteren Formausgang (2) geführt wird und der Formzwischenraum und der Ausgangskompressionsring (5) geformt sind, um Fluss vom Wirbeltyp des thermoplastischen Materials zu fördern, um eine glatte Oberflächenbeschaffenheit des höhlen Rohrs aus heißem thermoplastischem Material zu schaffen, wenn es über den Kompressionsring (5) geführt wird.

## Revendications

1. Procédé de moulage par extrusion-soufflage d'une matière thermoplastique, comprenant les étapes suivantes :
formage d'une matière thermoplastique chaude dans un tube creux ;
extrusion d'une paraison en poussant le tube creux de matière thermoplastique à travers une tête de filière ;
la tête de filière comprenant un mandrin (3) et une filière (1) qui sont espacés l'un de l'autre afin de définir un espace entre eux, la tête de filière ayant un orifice de filière inférieur (2) s'étendant à partir de l'espace ;
la tête de filière ayant une bague de compression de sortie (5) qui s'étend dans l'espace adjacent à l'orifice de filière inférieur (2), et la filière (1) et le mandrin (3) comprenant des surfaces incurvées en continu dans une zone de l'espace et adjacentes à la bague de compression de sortie (5) ;
l'action de faire passer le tube de matière thermoplastique chaude au-dessus de la bague de compression (5) adjacente à l'orifice de filière inférieur (2) et à l'embouchure de la filière ;
la bague de compression de sortie (5) étant façonnée pour promouvoir un flux de type turbulent pour la matière thermoplastique afin de conférer une finition de surface lisse au tube creux de matière thermoplastique chaude au moment où il passe au-dessus de la bague de compression (5) ;
fermeture d'une paire de moitiés de moule autour de la paraison extrudée;
insertion d'un poinçon de soufflage dans la paraison ;
faire passer de l'air à travers le poinçon de soufflage afin de gonfler la paraison contre les moitiés du moule ; et
dégager un article formé du moule.

2. Procédé, selon la revendication 1, dans lequel la bague de compression de sortie (5) constitue une extension du mandrin (3) et se projette depuis le mandrin (3) vers la filière (1).

3. Procédé, selon la revendication 2, dans lequel la bague de compression de sortie (5) se projette depuis le mandrin (3) sur une distance de 0,2 mm au moins vers la filière (1).

4. Procédé, selon la revendication 3, dans lequel la bague de compression de sortie (5) se projette depuis le mandrin (3) sur une distance de 0,3 mm environ vers la filière (1).

5. Procédé, selon l'une quelconque des revendications précédentes, comprenant l'étape consistant à améliorer le flux de matière thermoplastique le long de la filière (1) en traitant la surface de la filière (6) afin d'améliorer la résistance à l'usure et d'améliorer le flux de matière thermoplastique.

6. Procédé, selon la revendication 5, dans lequel la face de la filière (6) a fait l'objet d'une imprégnation ionique.

7. Procédé, selon l'une quelconque des revendications précédentes, comprenant l'étape consistant à dégager automatiquement une paraison formée des faces externes de la filière (1) et du mandrin (3).

8. Procédé, selon la revendication 7, dans lequel le moyen de dégagement (9, 10) est prévu sur les faces externes de la filière (1) et du mandrin (3).

9. Procédé, selon la revendication 8, dans lequel le moyen de dégagement est une première bande (9) d'un matériau de dégagement qui est prévue le long de la face externe de la filière (1) et une deuxième bande (10) d'un matériau de dégagement qui est prévue le long de la face externe du mandrin (3).

10. Procédé, selon l'une quelconque des revendications précédentes, comprenant l'étape consistant à chauffer la filière (1) au moins adjacente à l'embouchure de la filière (2).

11. Procédé, selon la revendication 10, dans lequel la filière est chauffée en appliquant une bande de dispositif chauffant sur la surface extérieure de la filière (1).

12. Appareil pour le moulage par extrusion-soufflage d'une matière thermoplastique, comprenant une tête de filière à travers laquelle un tube creux de matière thermoplastique est poussé, une paire de moitiés de moule destinées à être fermées autour d'une paraison extrudée, et un poinçon de soufflage permettant de souffler de l'air à travers le poinçon de soufflage pour gonfler la paraison contre les moitiés du moule afin de former un article moulé par extrusion-soufflage, la tête de filière comprenant un mandrin (3) et une filière (1) qui sont espacés l'un de l'autre afin de définir un espace entre eux, la tête de filière ayant un orifice de filière inférieur (2) s'étendant à partir de l'espace, la tête de filière ayant une bague de compression de sortie (5) qui s'étend dans l'espace adjacent à l'orifice de filière inférieur (2), et la filière (1) et le mandrin (3) comprenant des surfaces incurvées en continu dans une zone de l'espace et adjacentes à la bague de compression de sortie (5), le tube creux de matière thermoplastique étant passé au-dessus de la bague de compression (5) adjacente à l'orifice de filière inférieur (2) et à l'embouchure de la filière, et la bague de compression de sortie (5) étant façonnée pour promouvoir un flux de type turbulent pour la matière thermoplastique afin de conférer une finition de surface lisse au tube creux de matière thermoplastique chaude au moment où il passe au-dessus de la bague de compression (5).
